# EUROPÄISCHE PATENTSCHRIFT

(11) **EP 4 046 879 B1**
(45) Veröffentlichungstag und Bekanntmachung des Hinweises auf die Patenterteilung: **09.08.2023**
(21) Anmeldenummer: 22157863.6
(22) Anmeldetag: 22.02.2022
(51) Int. Cl.: B60R 21/11, E02F 9/16

(54) **SCHUTZEINRICHTUNG FÜR EINE ARBEITSFAHRZEUG-KABINENFRONT**
PROTECTIVE DEVICE FOR A WORK VEHICLE CABIN FRONT
DISPOSITIF DE PROTECTION POUR UNE FACE AVANT DE CABINE DE VÉHICULE DE TRAVAIL

(30) Priorität: 22.02.2021 DE 102021104164
(43) Veröffentlichungstag der Anmeldung: 24.08.2022
(73) Patentinhaber: Echle Hartstahl GmbH, 77709 Wolfach (DE)
(72) Erfinder: ECHLE, Lothar, 77709 Wolfach (DE)
(74) Vertreter: Patentanwälte und Rechtsanwalt Weiß, Arat & Partner mbB

(56) Entgegenhaltungen:
- DE-A1-102014 105 868
- JP-A- H09 228 422
- JP-A- 2011 084 876
- JP-A- 2012 162 932

## Beschreibung

### Technisches Gebiet

Die Erfindung betrifft eine Schutzeinrichtung für eine Arbeitsfahrzeug-Kabinenfront nach dem Oberbegriff des Anspruchs 1.

### Stand der Technik

Derartige Schutzeinrichtungen sind bereits in vielfältiger Form und Ausgestaltung bekannt und gebräuchlich. So wird beispielsweise in der EP 2 639 361 A1 ein Kabinenschutz für einen Bagger umfassend ein Frontschutzgitter und ein Kabinenschutzdach, wobei das Frontschutzgitter zumindest teilweise in das Kabinenschutzdach eingeschoben werden kann, wobei das Frontschutzgitter ein Oberteil und ein Unterteil umfasst.

In diesem Zusammenhang wird auf verschiedene aus dem Stand der Technik bekannte Kabinenschutzeinrichtungen verwiesen. Hier wird beispielsweise auf die JP 2003 232 053 A verwiesen, welche einen Kabinenschutz offenbart, welcher bei Bedarf von der Decke der Kabine vor die Frontscheibe gezogen werden kann.

Weiter wird auf die JP H 08 100 442 A verwiesen. Dort ist unter anderem einen Kabinenschutz beschrieben, welcher per Antrieb betätigt werden kann. Daneben wird auf die JP S 60 916 49 U verwiesen, welche einen statischen Kabinenschutz offenbart.

Ausserdem wird auf die DE 44 04 415 A1 verwiesen, welche einen Kabinenschutz offenbart. Dort wird ein Teil des Kabinenschutzes per hydraulischer Halteelemente in einer definierten Position gehalten.

Die GB 2 430 696 A und die JP 2004 074 853 A offenbaren weitere nach dem Stand der Technik bekannte Kabinenschutzeinrichtungen.

Zudem ist die JP 201 2 1 62932 A zu nenne, welche eine Schutzeinrichtung für eine Arbeitsfahrzeug-Kabinenfront offenbart, die begehbar ist.

Schließlich ist noch die JP 201 1 084876 A anzuführen, welche eine Frontschutzbügel-Montagevorrichtung für eine Baumaschine offenbart, die es erlaubt einen Frontschutzbügel auszutauschen. Eine Schutzeinrichtung für eine Arbeitsfahrzeug-Kabinenfront gemäß dem Oberbegriff von Anspruch 1 wird durch die JP H 09 228 422 A offenbart.

### Aufgabe der Erfindung

Die Aufgabe der vorliegenden Erfindung ist es, die Nachteile aus dem Stand der Technik zu überwinden. Insbesondere soll eine Schutzeinrichtung bereitgestellt werden, bei der für den Nutzer ein Öffnen eines Sichtfensters im Frontschutzgitter vereinfacht möglich sein soll.

### Lösung der Aufgabe

Zur Lösung der Aufgabe führen die Merkmale nach dem Anspruch 1.

Vorteilhafte Ausgestaltungen sind in den Unteransprüchen beschrieben.

Die erfindungsgemässe Schutzeinrichtung dient dem Schutz einer Arbeitsfahrzeug-Kabinenfront. Es handelt sich dabei um eine frontseitig an eine Kabinenfront anbringbare Schutzeinrichtung, welche aus einer Frontsicherung besteht. Die Frontsicherung ist leicht von der Kabinenfront weg bogenförmig ausgeführt, wobei die Frontsicherung aus einem Fuß-Festschutz und einem Mobilschutz besteht. Vorgesehen ist, dass die Frontsicherung in ihrer Ausbildung an die Gegebenheiten der jeweiligen Kabinenfront angepasst ist.

Der Fuß-Festschutz ist derart ausgestaltet, dass er nicht beweglich ist und etwa die Hälfte der Arbeitsfahrzeug-Kabinenfront und damit der dort angebrachten Scheibe abdeckt. Natürlich ist hier eine Anpassung an die jeweilige Arbeitsfahrzeug-Kabinenfront vorgesehen, so dass die Abdeckung des Fuß-Festschutzes auch deutlich unter einer Hälfte der Arbeitsfahrzeug-Kabinenfront liegen kann. Dabei handelt es sich um den unteren Bereich der Frontsicherung. Der untere Bereich ist derjenige Bereich, welcher bei ordnungsgemässem Einbau der Schutzeinrichtung zu einem Untergrund hin angeordnet ist, auf dem sich das Arbeitsfahrzeug entsprechend bewegen kann. Oben ist im Rahmen der Erfindung derart definiert, dass sie von dem Untergrund, auf dem sich das Fahrzeug bewegen kann, weg angeordnet ist.

Der Mobilschutz stellt den Teil der Frontsicherung dar, welcher aus dem Sichtbereich des in der Arbeitsfahrzeugkabine sitzenden Nutzers wegbewegt werden kann, um die Sicht frei vom Mobilschutz zur Verfügung stellen zu können. Dies kann beispielsweise dann der Fall sein, wenn der Nutzer aufgrund fehlender Gefahr die Frontsicherung eigentlich nicht benötigt und eine bessere Sicht in den Arbeitsbereich seines Arbeitsfahrzeugs haben möchte.

In einer Schließlage ist dabei der Mobilschutz auf dem Fuß-Festschutz komplementär angeordnet. Die Formulierung wonach der Mobilschutz in Schließlage auf dem oder auch über dem Fuß-Festschutz komplementär angeordnet ist, ist derart zu verstehen, dass in Schließlage der Mobilschutz mit dem Fuß-Festschutz eine optische Einheit bildet.

Erfindungsgemäss ist in einer Offenlage der Mobilschutz nach unten geklappt und dabei vor dem Fuß-Festschutz angeordnet. Nach unten geklappt bedeutet in diesem Zusammenhang, dass der Mobilschutz hin zu einem Untergrund klappbar ist. Die Anordnung vor dem Fuß-Festschutz bedeutet, dass der Mobilschutz derart nach unten geklappt wird, dass er sich weg von der Arbeitsfahrzeug-Kabinenfront bewegt, um anschliessend in einer Offenlage vor dem Fuß-Festschutz anzukommen. Dabei ist der Fuß-Festschutz in Offenlage zwischen dem Mobilschutz und der Arbeitsfahrzeug-Kabinenfront angeordnet. Dies ist vorteilhaft, da bisherige aus dem Stand der Technik bekannte Mobilschutz-Einrichtungen immer nach oben geklappt, gefahren oder geschoben werden, was für den Nutzer den Nachteil hat, dass er gerade bei manuellem Öffnen den unter Umständen schweren Mobilschutz hochheben muss und beim Schließen der schwere Mobilschutz unkontrolliert nach unten schwenkt und die Nutzer unter Umständen verletzt. Dies ist bei einem Herunterklappen, wie hier beschrieben, nicht der Fall. Zudem besteht die Möglichkeit des manuellen Öffnens und Schließen durch einen Benutzer aus der Kabine ohne diese verlassen zu müssen. Ein Aussteigen ist daher nicht mehr nötig. Weiterhin werden dadurch unnötige und waghalsige Klettereien an der Arbeitsmaschine verhindert, da der Mobilschutz nun leicht erreicht werden kann. Auch Verlängerungen wie Haken oder andere sperrige Vorrichtungen die zur Erreichung eines hochgeklappten Gitters oder Schutzes notwendig waren, werden nun nicht mehr benötigt.

Weiter ist zwischen dem Fuß-Festschutz und dem Mobilschutz eine Schwenkkulisse vorhanden. Diese Schwenkkulisse unterstützt das nach unten klappen des Mobilschutzes in Offenlage und das nach oben klappen des Mobilschutzes in Schließlage. Nach oben klappen bedeutet hierbei, dass es sich um die im Wesentlichen entgegengesetzte Richtung zum Untergrund handelt.

Weiter ist zwischen dem Fuß-Festschutz und dem Mobilschutz eine Gasdruckfeder angeordnet. In einem Ausführungsbeispiel kann die Gasdruckfeder das nach unten klappen des Mobilschutzes in der Weise unterstützen, als das die Gasdruckfeder bspw. ein Scharnier oder eine Hebel-Konstruktion kraftaufnehmend nach unten begleitet und kraftentfaltend nach oben begleitet.

Erfindungsgemäß ist die Gasdruckfeder derart angeordnet, dass sie mit der Schwenkkulisse eine Wirkverbindung eingeht. Dabei ist die Gasdruckfeder zwischen dem Fuß-Festschutz und der Schwenkkulisse angeordnet. Die Schwenkkulisse kann in diesem Zusammenhang bevorzugt eine Vier-Punkt-Rotations-Hebel-Konstruktion sein, wobei die Gasdruckfeder wieder kraftaufnehmend auf einen Teil der Schwenkkulisse einwirkt, während des Öffnungsvorgangs kraftabgebend einwirkt und beim Schließvorgang auf die vier Punkte der Rotations-Hebel-Konstruktion, die als Gelenke ausgeführt sind, einwirkt. Weiter ist eine Offen-Arretierung vorhanden.

Die Offen-Arretierung dient dem Festlegen des Mobilteils an dem Fuß-Festschutz in Offenlage. Auf diese Weise wird vorteilhaft verhindert, dass in Offenlage der Mobilschutz ungewollt nach oben schwenkt.

Auch ist eine Schließ-Arretierung vorhanden. Die Schließ-Arretierung dient vorteilhaft dazu, dass in Schließlage der Mobilschutz oberhalb des Fuß-Festschutzes arretiert bzw. festgelegt werden kann, um ein ungewolltes Wegschwenken des Mobilschutzes zu verhindern.

Ausserdem kann die Frontsicherung einen Kopf-Festschutz aufweisen. Der Kopf-Festschutz ist derart vorhanden, als dass er oberhalb des in Schließlage angeordneten Mobilschutzes ausgeführt ist. Der Kopf-Festschutz ist ähnlich wie der Fuß-Festschutz in der Regel fest und unbeweglich mit der Arbeitsfahrzeug-Kabine verbunden. Dabei ist in der Schließlage der Mobilschutz also zwischen dem Fuß-Festschutz und dem Kopf-Festschutz angeordnet.

Außerdem ist der Fuß-Festschutz mit dem Kopf-Festschutz über zwei randseitige Stege verbunden. Die beiden randseitigen Stege bilden ebenfalls einen Rahmen in welchen der Mobilschutz in Schließlage einfahren oder auffahren kann. Die beiden randseitigen Stege verleihen der Frontsicherung eine entsprechende Festigkeit im Arbeitseinsatz.

In Schließlage fährt der Mobilschutz beispielsweise auf die beiden randseitigen Stege auf. Um hier einen besseren Sitz des Mobilschutzes zu gewährleisten und ein einfacheres Auffahren des Mobilschutzes zu gewährleisten weist jede der beiden randseitigen Stege zumindest ein Passblech auf. Dabei handelt es sich um an den beiden randseitigen Stegen angebrachte Passbleche, die den Mobilschutz zur Schließlage führen können und dabei die Festigkeit zusätzlich erhöhen.

Auch ist ein Griff an dem Mobilschutz vorgesehen, da der Mobilschutz aufgrund seines geringen Gewichtes auf einfache Art und Weise von dem Nutzer manuell bspw. mit oder gegen die Kraft der Gasdruckfeder nach unten geklappt werden kann. In gleicher Weise kann der Mobilschutz auch mit oder gegen die Kraft der Gasdruckfeder durch den Nutzer auf einfache Weise in Schließlage verschwenkt werden.

Der Mobilschutz ist in einem bevorzugten Ausführungsbeispiel als ein erstes Gitter ausgeführt. Der Fuß-Festschutz ist als ein zweites Gitter ausgeführt. In Schließlage kommt das erste Gitter auf dem zweiten Gitter zum Liegen. Dabei sind etwaige von unten nach oben verlaufende Gitterstreben in einer gemeinsamen linearen Erstreckung angeordnet. In Offenlage kommt das erste Gitter auf dem zweiten Gitter derart zum Liegen, als dass die Gitterstreben des ersten und des zweiten Gitters in einer weg von der Arbeitsfahrzeug-Kabine angeordneten Erstreckung eine gemeinsame Verbreiterung bilden, so dass sich nicht die von unten nach oben verlaufende Länge des Fuß-Festschutzes verlängert, sondern die von der Arbeitsfahrzeug-Kabinenfront weglaufende Breite sich durch die Gitterstäbe des Mobilschutzes verbreitert. In diesem Ausführungsbeispiel weisen die Gitterstäbe eine von der Kabinenfront weg angeordnete Tiefe von 1 bis 4 cm und eine zur Tiefe im Wesentlichen rechtwinklig angeordnete Breite von 4 bis 8 mm auf. Auf diese Weise hat der Nutzer immer einen einwandfreien Einblick auf seinen Arbeitsbereich.

Auch ist vorgesehen, dass eine Kabinen-Befestigungseinrichtung vorhanden ist. Dies hat den Vorteil, dass die Schutzeinrichtung auf einfache Art und Weise an vorhandene Arbeitsfahrzeug-Kabinenfronten aufgebracht und befestigt werden kann. Es kann sich dabei bspw. um Winkelbleche handeln, die einerseits mit der Schutzeinrichtung verbunden sind und andererseits mit der Arbeitsfahrzeug-Kabinenfront verbindbar sind.

Auch ist eine zusätzliche Anbindung der Schutzeinrichtung zu einem Kabinendachschutz vorhanden. Der Kabinendachschutz erstreckt sich dabei über ein Dach der Arbeitsfahrzeug-Kabine und schützt zusätzlich zu der Front auch den Dachbereich der Arbeitsfahrzeug-Kabine. Sämtliche wesentlichen Teile können hier aus einem metallenem Werkstoff hergestellt sein.

Zuletzt wird auch die Verwendung einer erfindungsgemässen Schutzeinrichtung zur Anbringung an einer Arbeitsfahrzeug-Kabine unter Schutz gestellt.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine Seitenansicht von schräg vorne auf eine erfindungsmäße Schutzeinrichtung mit einer Arbeitsfahrzeug-Kabine;
Figur 2 eine geschnittene Seitenansicht der erfindungsgemäßen Schutzeinrichtung in Offenlage;
Figur 3 eine Seitenansicht der Figur 2 in einer Mittellage;
Figur 4 eine Seitenansicht der Figuren 2 und 3 in einer Schließlage;
Figur 5 eine Vorderansicht auf die Figur 4 von schräg vorne.

### Ausführungsbeispiel

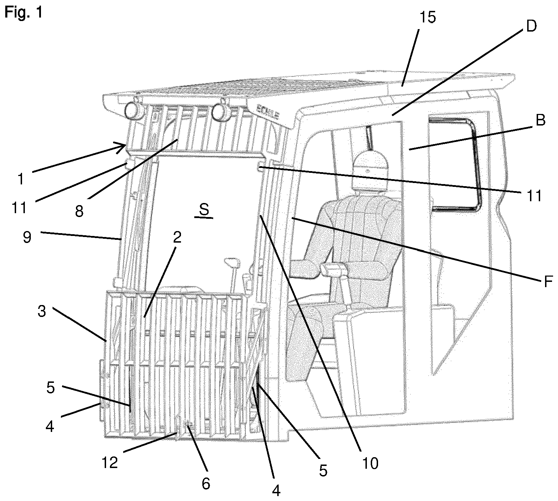

In Figur 1 ist eine Arbeitsfahrzeug-Kabine B zu erkennen. Die Arbeitsfahrzeug-Kabine B weist eine Arbeitsfahrzeug-Kabinenfront F auf. Außerdem weist die Arbeitsfahrzeug-Kabine B ein Arbeitsfahrzeug-Kabinendach D auf.

Die Schutzeinrichtung besteht in erster Linie aus einer Frontsicherung 1, wobei die Frontsicherung 1 aus einem Fuß-Festschutz 2 und einem Mobilschutz 3 besteht.

Bei der in Figur 1 gezeigten Offenlage ist der Mobilschutz 1 nach unten zu einem hier nicht näher gezeigten Untergrund geklappt und ist dabei vor dem Fuß-Festschutz 2 angeordnet. Weiter lässt sich in der Figur 1 gut erkennen, dass in Offenlage ein Sichtfenster S in der Frontsicherung 1 entsteht, wobei die Sicht auch in Schließlage immer gewährleistet bleibt.

Auch ist eine Schwenkkulisse 4 gezeigt, wobei hier eine zweite Schwenkkulisse 4 vorhanden ist. Die beiden Schwenkkulissen 4 sind seitlich an der Frontsicherung 1 derart angeordnet, sodass sie ein Hoch- und Runterklappen des Mobilschutzes 3 ermöglichen sollen.

Daneben ist eine Gasdruckfeder 5 gezeigt, die die jeweilige mit ihr in Verbindung stehende Schwenkkulisse 4 kraftaufnehmend oder kraftabgebend unterstützt. In der Offen-Stellung des Mobilschutzes 3 kommt eine Offenarretierung 6 zum Einsatz, welche derart gestaltet ist, dass bspw. ein federgelagerter Passstift des Mobilschutzes 3 in einer entsprechenden Aufnahme des Fuß-Festschutzes 2 einfahren kann.

Dies kann dabei manuell auch wieder gelöst werden, um aus der Offenlage in die Schließlage zu kommen. Dabei befindet sich die Offenarretierung 6 jeweils an dem nach unten weisenden Ende des Mobilschutzes 3 und des Fuß-Festschutzes 2.

Außerdem ist eine Griff 12 vorhanden. Der Griff 12 ist an dem Mobilschutz 3 angeordnet. Dabei ragt er von dem Mobilschutz 3 ab. Es sind grundsätzlich auch andere Konstruktionen eines Griffs zum Handhaben des Mobilschutzes 3 möglich. In dem hier gezeigten Ausführungsbeispiel ist der Griff 12 in Offenlage weg von dem Fuß-Festschutz 2 an dem Mobilschutz 3 angeordnet.

Auch ist als Teil der Frontsicherung 1 ein Kopf-Festschutz 8 gezeigt. Der Kopf-Festschutz 8 ist oberhalb des Sichtfensters S angeordnet. Der Kopf-Festschutz 8 ist mit dem Fuß-Festschutz 2 über zwei randseitige Stege 9, 10 verbunden.

Die beiden randseitigen Stege 9, 10 weisen je ein Passblech 11 auf. Die Anzahl, Form und Ausgestaltung der Passbleche 11 ist der jeweiligen Anforderung geschuldet.

Auch ist eine nicht näher gezeigte Anbindung der Frontsicherung 1 zu dem Kabinenschutzdach 15 vorhanden.

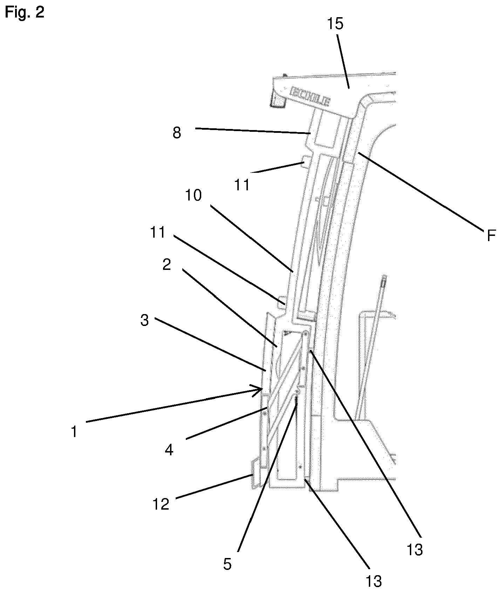

Zuzüglich zu den in der Figur 1 gemachten Ausführungen ist in der Figur 2 gut zu erkennen, wie die Frontsicherung 1 über Kabinen-Befestigungseinrichtungen 13 mit der Arbeitsfahrzeug-Kabinenfront F verbunden ist. Ansonsten zeigt die Figur 2 einen Teil der Seitenansicht der Figur 1. Um Wiederholungen zu vermeiden wird auf die zur Figur 1 gemachten Ausführungen verwiesen.

Insbesondere wird darauf hingewiesen, dass bei identischen Bezugsziffern zu den identischen Merkmalen die gleichen Ausführungen zu der Figur 2 gelten sollen, welche auch zur Figur 1 gemacht wurden.

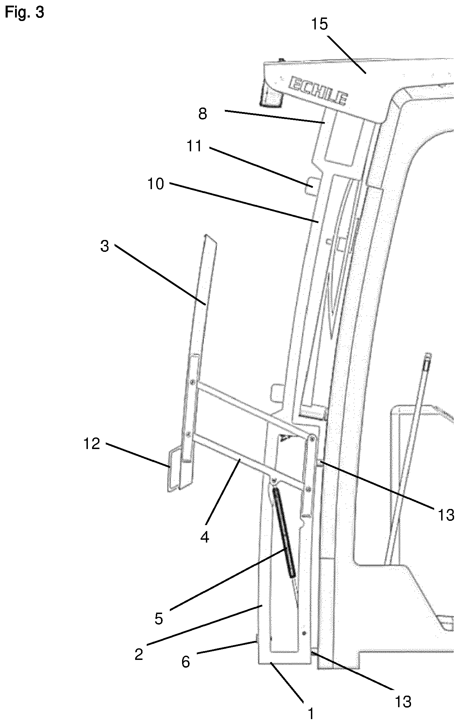

In der Figur 3 ist eine Mittellage gezeigt. In der Mittellage befindet sich der Mobilschutz 3 in einer Position zwischen der Offenlage und der Schließlage. Dort ist in der Seitenansicht gut zu erkennen, wie die Gradruckfeder 5 teilweise ausgefahren ist und der Mobilschutz 3 sich von dem Fuß-Festschutz 2 gelöst hat und das Sichtfenster S zwischen den beiden Stegen 9, 10 noch nicht erreicht hat.

Ansonsten gelten auch für die Figur 3 für die in den Figuren 1 und 2 gemachten Ausführungen. Dies insbesondere dann, wenn die gleichen Bezugsziffern die gleichen Merkmale beschreiben.

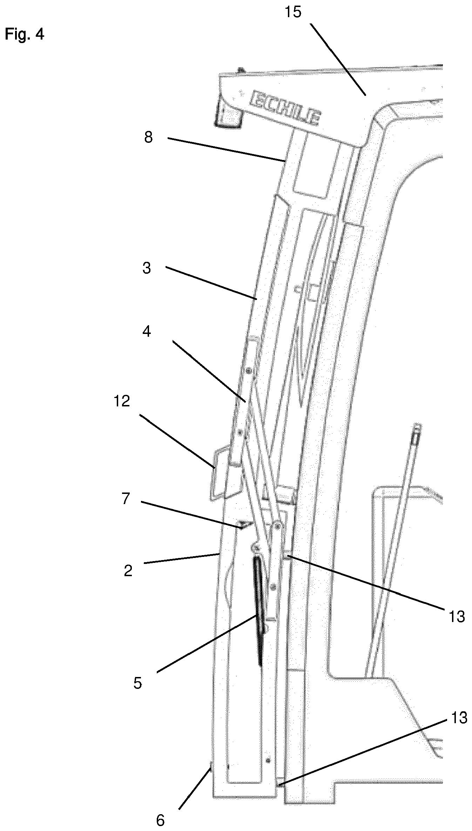

In Figur 4 ist nun die Schließlage gezeigt, bei der das Mobilteil 3 oberhalb des Fuß-Festschutzes 2 angeordnet positioniert ist. Dabei ist eine Schließ-Arretierung 7 derart vorhanden, dass sie das Mobilteil 3 mit dem Fuß-Festschutz 2 festlegend verbindet.

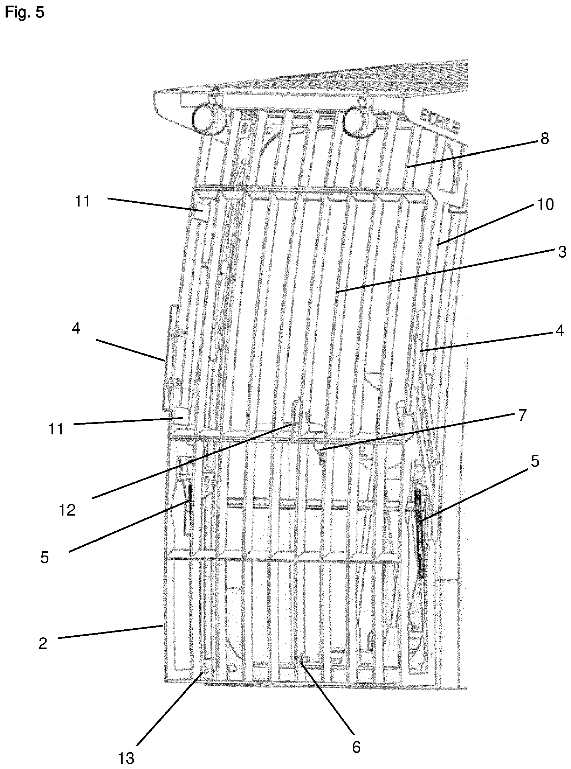

Die in der Figur 4 gezeigte Schließlage ist in der Figur 5 nochmals von einer schrägen Vorderansicht her gezeigt. Dort ist ebenfalls gut zu erkennen, wie Gitterstäbe eines ersten Gitters des Mobilschutzes 3 in der Verlängerung der Gitterstäbe des zweiten Gitters des Fuß-Festschutzes 2 in Schließlage angeordnet sind und eine gemeinsame lineare Erstreckung bilden.

In Figur 2 ist gezeigt, wie in Offenlage die Gitterstäbe des ersten Gitters des Mobilschutzes 3 auf den Gitterstäben des zweiten Gitters des Fuß-Festschutzes 2 aufliegen und die Gesamtkonstruktion verbreitern.

### Bezugszeichenliste

| | |
|---|---|
| 1 | Frontsicherung |
| 2 | Fuß-Festschutz |
| 3 | Mobilschutz |
| 4 | Schwenkkulisse |
| 5 | Gasdruckfeder |
| 6 | Offen-Arretierung |
| 7 | Schließ-Arretierung |
| 8 | Kopf-Festschutz |
| 9 | randseitiger Steg |
| 10 | randseitiger Steg |
| 11 | Passblech |
| 12 | Griff |
| 13 | Kabinen - Befestigungseinrichtung |
| 14 | |
| 15 | Kabinendachschutz |
| | |
| B | Arbeitsfahrzeug-Kabine |
| F | Arbeitsfahrzeug-Kabinenfront |
| D | Arbeitsfahrzeug-Kabinendach |
| S | Sichtfenster |
| | |
| | |
| | |
| | |
| | |
| | |
| | |
| | |
| | |

## Patentansprüche

1. Schutzeinrichtung für eine Arbeitsfahrzeug-Kabinenfront, bestehend aus einer Frontsicherung (1), wobei die Frontsicherung (1) aus einem Fuß-Festschutz (2) und einem Mobilschutz (3) besteht, wobei in einer Schließlage der Mobilschutz (3) auf dem Fuß-Festschutz (2) komplementär angeordnet ist, wobei in einer Offenlage der Mobilschutz (3) nach unten geklappt ist und dabei vor dem Fuß-Festschutz (2) angeordnet ist
**dadurch gekennzeichnet, dass**
zwischen dem Fuß-Festschutz (2) und dem Mobilschutz (3) eine Schwenkkulisse (4) vorhanden ist, wobei zwischen dem Fuß-Festschutz (2) und dem Mobilschutz (3) oder der Schwenkkulisse (4) eine Gasdruckfeder (5) angeordnet ist.

2. Schutzeinrichtung nach einem der vorigen Ansprüche, **dadurch gekennzeichnet, dass** eine Offen-Arretierung (6) vorhanden ist.

3. Schutzeinrichtung nach einem der vorigen Ansprüche, **dadurch gekennzeichnet, dass** eine Schließ-Arretierung (7) vorhanden ist.

4. Schutzeinrichtung nach einem der vorigen Ansprüche, **dadurch gekennzeichnet, dass** ein Kopf-Festschutz (8) vorhanden ist.

5. Schutzeinrichtung nach Anspruch 4, **dadurch gekennzeichnet, dass** in der Schließlage der Mobilschutz (3) zwischen dem Fuß-Festschutz (2) und dem Kopf-Festschutz (8) angeordnet ist.

6. Schutzeinrichtung nach Anspruch 4, **dadurch gekennzeichnet, dass** der Fuß-Festschutz (2) mit dem Kopf-Festschutz (8) über zwei randseitige Stege (9, 10) miteinander verbunden sind.

7. Schutzeinrichtung nach Anspruch 6, **dadurch gekennzeichnet, dass** die beiden randseitigen Stege (9, 10) je ein Passblech (11) vorhanden ist.

8. Schutzeinrichtung nach einem der vorigen Ansprüche, **dadurch gekennzeichnet, dass** der Mobilschutz (3) einen Griff (12) aufweist.

9. Schutzeinrichtung nach einem der vorigen Ansprüche, **dadurch gekennzeichnet, dass** der Mobilschutz (3) ein erstes Gitter und der Fuß-Festschutz (2) ein zweites Gitter aufweist, wobei in Offenlage, das erste Gitter auf dem zweiten Gitter zum Liegen kommt und in Schließlage das erste Gitter in der Verlängerung des zweiten Gitters angeordnet ist.

10. Schutzeinrichtung nach einem der vorigen Ansprüche, **dadurch gekennzeichnet, dass** eine Kabinen - Befestigungseinrichtung (13) vorhanden ist.

11. Schutzeinrichtung nach einem der vorigen Ansprüche, **dadurch gekennzeichnet, dass** eine Anbindung zu einem Kabinendachschutz (15) vorhanden ist.

12. Verwendung einer Schutzeinrichtung nach einem der Ansprüche 1 bis 11 zur Anbringung an einer Arbeitsfahrzeug-Kabine.

## Claims

1. Protective device for a work vehicle cabin front, consisting of a front protection (1), wherein the front protection (1) consists of a fixed foot protection (2) and a mobile protection (3), wherein in a closed position the mobile protection (3) is complementarily arranged on the fixed foot protection (2), wherein in an open position the mobile protection (3) is folded down and thereby arranged in front of the fixed foot protector (2),
**characterized in that**
a swivel backdrop (4) is provided between the fixed foot protection (2) and the mobile protection (3), wherein a gas pressure spring (5) is arranged between the fixed foot protection (2) and the mobile protection (3) or the swivel backdrop (4).

2. Protection device according to one of the preceding claims, **characterized in that** an open locking (6) is provided.

3. Protection device according to one of the preceding claims, **characterized in that** a closing locking (7) is provided.

4. Protection device according to one of the previous claims, **characterized in that** a fixed head protection (8) is provided.

5. Protection device according to claim 4, **characterized in that** in the closed position the mobile protection (3) is arranged between the fixed foot protection (2) and the fixed head protection (8).

6. Protection device according to claim 4, **characterized in that** the fixed foot protection (2) is connected to the fixed head protection (8) via two edge webs (9, 10).

7. Protection device according to claim 6, **characterized in that** the two edge webs (9, 10) are each provided with a fitting plate (11).

8. Protection device according to one of the previous claims, **characterized in that** the mobile protection (3) has a handle (12).

9. Protection device according to one of the previous claims, **characterized in that** the mobile protection (3) has a first grid and the fixed foot protection (2) has a second grid, wherein in the open position the first grid comes to rest on the second grid and in the closed position the first grid is arranged in the extension of the second grid.

10. Protection device according to one of the previous claims, **characterized in that** a cabin fastening device (13) is provided.

11. Protection device according to one of the preceding claims, **characterized in that** a connection to a cabin roof protection (15) is provided.

12. Use of a protection device according to any one of claims 1 to 11 for attachment to a work vehicle cabin front.

## Revendications

1. Dispositif de protection pour une face avant de cabine de véhicule de travail, composé d'une protection frontale (1), la protection frontale (1) étant composée d'une protection fixe de pied (2) et d'une protection mobile (3), dans une position fermée la protection mobile (3) étant disposée de façon complémentaire sur la protection fixe de pied (2), dans une position ouverte la protection mobile (3) étant repliée vers le bas et ainsi disposée devant la protection fixe de pied (2)
**caractérisé en ce que**
une coulisse de pivotement (4) est présente entre la protection fixe de pied (2) et la protection mobile (3), un ressort pneumatique (5) étant disposé entre la protection fixe de pied (2) et la protection mobile (3) ou la coulisse de pivotement (4).

2. Dispositif de protection selon l'une des revendications précédentes, **caractérisé en ce qu'**un dispositif de blocage d'ouverture (6) est présent.

3. Dispositif de protection selon l'une des revendications précédentes, **caractérisé en ce qu'**un dispositif de blocage de fermeture (7) est présent.

4. Dispositif de protection selon l'une des revendications précédentes, **caractérisé en ce qu'**une protection fixe de tête (8) est présente.

5. Dispositif de protection selon la revendication 4, **caractérisé en ce que,** dans la position fermée, la protection mobile (3) est disposée entre la protection fixe de pied (2) et la protection fixe de tête (8).

6. Dispositif de protection selon la revendication 4, **caractérisé en ce que** la protection fixe de pied (2) est reliée à la protection fixe de tête (8) par l'intermédiaire de deux traverses (9, 10) latérales.

7. Dispositif de protection selon la revendication 6,
**caractérisé en ce qu'**une plaque d'ajustement (11) est présente respectivement pour les deux traverses (9, 10) latérales.

8. Dispositif de protection selon l'une des revendications précédentes, **caractérisé en ce que** la protection mobile (3) présente une poignée (12).

9. Dispositif de protection selon l'une des revendications précédentes, **caractérisé en ce que** la protection mobile (3) présente une première grille et la protection fixe de pied (2) présente une seconde grille, dans la position ouverte la première grille venant se poser sur la seconde grille et dans la position fermée la première grille étant disposée dans la prolongation de la seconde grille.

10. Dispositif de protection selon l'une des revendications précédentes, **caractérisé en ce qu'**un dispositif d'attache de cabine (13) est présent.

11. Dispositif de protection selon l'une des revendications précédentes, **caractérisé en ce qu'**une liaison à une protection de toit de cabine (15) est présente.

12. Utilisation d'un dispositif de protection selon l'une des revendications 1 à 11 pour la liaison à une cabine de véhicule de travail.
